# EUROPÄISCHE PATENTSCHRIFT

(11) **EP 0 938 945 B1**
(45) Veröffentlichungstag und Bekanntmachung des Hinweises auf die Patenterteilung: **23.07.2003**
(21) Anmeldenummer: 99103585.8
(22) Anmeldetag: 24.02.1999
(51) Int. Cl.: B23K 13/01, B23K 11/11, B23K 13/04

(54) **Vorrichtung zum induktiven Erwärmen zur stoffschlüssigen Verbindung zweier Werkstücke**
Inductivly heating apparatus used to bind two workpieces
Appareil pour assembler deux pièces par chauffage inductif

(30) Priorität: 26.02.1998 DE 19808023
(43) Veröffentlichungstag der Anmeldung: 01.09.1999
(73) Patentinhaber: Bayerische Motoren Werke Aktiengesellschaft, 80788 München (DE); Celes Groupe Fives-Lille, 68610 Lautenbach (FR)
(72) Erfinder: Kamaras, Otto, 80997 München (DE); Abraham, Joseph, 68250 Rouffach (FR)

(56) Entgegenhaltungen:
- DE-A- 2 364 554
- US-A- 3 388 234
- PATENT ABSTRACTS OF JAPAN vol. 10, no. 126 (M-477) [2183], 10. Mai 1986 (1986-05-10) & JP 60 255282 A (MITSUBISHI DENKI K.K.), 16. Dezember 1985 (1985-12-16)

## Beschreibung

Die Erfindung bezieht sich nach dem Oberbegriff des Patentanspruches 1 auf eine Vorrichtung zum induktiven Erwärmen zur stoffschlüssigen Verbindung zweier Werkstücke, wobei die Vorrichtung eine hohle, von einem Kühlmittel durchströmte Leiterschleife mit einem eine Feldstreuung reduzierenden Kern umfaßt.

Eine derartige Vorrichtung ist beispielsweise aus der DE-A 24 53 579 bekannt, wobei einer einzigen, zirkular gestalteten Leiterschleife mittig ein Magnetkern zugeordnet ist zur Steigerung des induzierten Stromes zur Erwämung für eine stoffschlüssige Verbindung flächiger Werkstücke. Da mit dieser Vorrichtung eine stoffschlüssige Verbindung durch An- bzw. Niederschmelzen des Werkstoffes in zu verbindenden Bereichen der Werkstücke erzielt ist, kommt diese bekannte Vorrichtung ohne eine Druckeinrichtung aus.

Weiter ist aus der DE-A 37 41 507 eine Vorrichtung zum induktiven Erwärmen zur stoffschlüssigen Verbindung zweier Werkstücke bekannt, bei dem der Kern der Vorrichtung die Form eines Napfes hat mit einem zentrisch angeordneten zylindrischen Pol und einem zirkularen Pol der Napfwand, wobei als Leiterschleife eine auf dem zentrischen Pol angeordnete Spule dient. Hierbei hat der zentrische Pol die Aufgabe, die vom zirkularen Pol der Napfwand ausgehenden Feldlinien im Bereich der Erwärmungsstelle der zu verbindenden Werkstücke zu konzentrieren.

Bei dieser bekannten Vorrichtung kann der Napf zwar druckbeaufschlagt werden zur Unterstützung der stoffschlüssigen Verbindung, jedoch sind für die Ausbildung dieser Vorrichtung zur Anordnung in einer einsatzfähigen Elektrode von gängigen Abmessungen bezüglich Bauaufwand und Festigkeit erhebliche Schwierigkeiten zu überwinden, femer auch für die erforderliche Energiezufuhr und für die Wärmeabfuhr aus dieser Vorrichtung. Weiter nachteilig sind die prinzipbedingten relativ langen Feldlinien vom zirkularen zum zentrischen Pol.

Der Erfindung liegt die Aufgabe zugrunde, die gattungsgemäße Vorrichtung derart weiterzubilden, daß eine druckbeaufschlagte Vorrichtung mit der Erwärmung dienenden kurzen, konzentrierten Feldlinien erzielt ist.

Diese Aufgabe ist mit dem Patentanspruch 1 dadurch erreicht, daß in einer hohlen Druckelektrode/Druckinduktor mit einer Isolierkappe eine U-förmig gestaltete Leiterschleife mit ihrem die die Druckelektrode der Länge nach durchsetzenden U-Schenkeln verbindenden Steg innenseitig der Isolierkappe benachbart angeordnet ist, und daß zwischen den U-Schenkeln der Leiterschleife ein jochartig gestalteter Kern mit beiderseits des Leiterschleifen-Steges angeordneten, kappeninnenseitig endenden Jochschenkeln vorgesehen ist.

Mit der Erfindung ist in vorteilhafter Weise zum einen eine druckbeaufschlagte Vorrichtung mit der Möglichkeit einer erheblichen Energiezufuhr erzielt und zum anderen mit der erfindungsgemäßen kappennahen Anordnung des Leiterschleifen-Steges und des diesen zugeordneten Kernes kurze, konzentrierte Feldlinien erreicht.

In Ausgestaltung der Erfindung ist eine baulich vorteilhaft gestaltete Druckelektrode dadurch erreicht, daß diese als ein kappenseitig offen ausgebildeter Zylinderabschnitt aus einem druckfesten, elektrisch isolierenden Kunststoff gestaltet ist und daß die hohlen U-Schenkeln der Leiterschleife kappenseitig mit einer den Zylinderabschnitt verschließenden, metallenen Bodenplatte fest verbunden sind, die ferner einen die kühlmittelführenden U-Schenkeln zwischen Bodenplatte und Joch-Kern verbindenden Kühlmittelkanal begrenzt, dessen übrige Begrenzung aus einem Isolierwerkstoff gebildet dem geblechten Joch-Kern im wesentlichen angepaßt ist.

Diese vorteilhafte Kombination baulicher Merkmale der erfindungsgemäßen Vorrichtung ergibt in Verbindung mit zusätzlichen Ausgestaltungen weiterer Unteransprüche den Vorteil, daß blechartige Werkstücke von gleicher oder unterschiedlicher Stärke aus Materialien wie beispielsweise Stahl und Aluminium mit gleichen oder unterschiedlichen Schmelzpunkten mittels einer punktuellen Warmknetung durch eine Druckpressung zwischen diametralen Druckelektroden zu verbinden sind.

Zur Erzielung einer einwandfreien stoffschlüssigen Verbindung durch druckbeaufschlagtes Warmkneten ist in weiterer Ausgestaltung der Erfindung jeder Leiterschieife der diametralen Druckelektroden jeweils eine dem Schmelzpunkt des zugeordneten Werkstückes entsprechend gesondert einstellbare Frequenz zwischen 10 - 400 kHz mit einem Spannungsbereich von 50 - 500 V und einem Strom bis 1.200 A zugeführt, wobei die Werkstücke zwischen den Druckelektroden mit einer Druckkraft von 1 - 2 kN beaufschlagt sind.

Mit dieser erfindungsgemäß angepaßten Energiezufuhr können in besonders vorteilhafter Weise Werkstücke aus unterschiedlichen Materialien stoffschlüssig verbunden werden, vorzugsweise ein Aluminiumblech mit einem Stahlblech.

Für die stoffschlüssige Verbindung zweier unterschiedlicher Materialien zwischen diametralen Druckelektroden kann es schließlich besonders vorteilhaft sein, daß die Druckelektroden drehbar angeordnet sind, um die vorzugsweise in einer Ebene angeordneten Joch-Kerne der beiden Elektroden relativ zueinander winkelverstellbar anzuordnen, insbesondere zueinander quergerichtet anzuordnen, wobei derartige Winkelstellungen mittels Rasteinrichtungen zwischen einem Anschlußkopf jeder Druckelektrode und einer zangenseitigen Verbindungskupplung dienen.

Kern der erfindungsgemäßen Vorrichtung ist zum einen ein unmittelbar kappeninnenseitig angeordneter Leiterschleifen-Abschnitt bzw. Steg mit um diesem Steg verlaufenden Feldlinien, die mittels der seitlich des Leiterschleifen-Steges verlaufend angeordneten, kappeninnenseitig endenden Schenkeln des geblechten Joch-Kernes im Bereich der Erwärmungsstelle zur stoffschlüssige Druckpress-Verbindung vorteilhaft konzentriert sind.

Die Erfindung ist anhand eines in der Zeichnung dargestellten Ausführungsbeispiels beschrieben. Es zeigt
- Figur 1: zwei diametral an Zangen angeordnete Druckelektroden bzw. Druckinduktoren gemäß der Erfindung, und

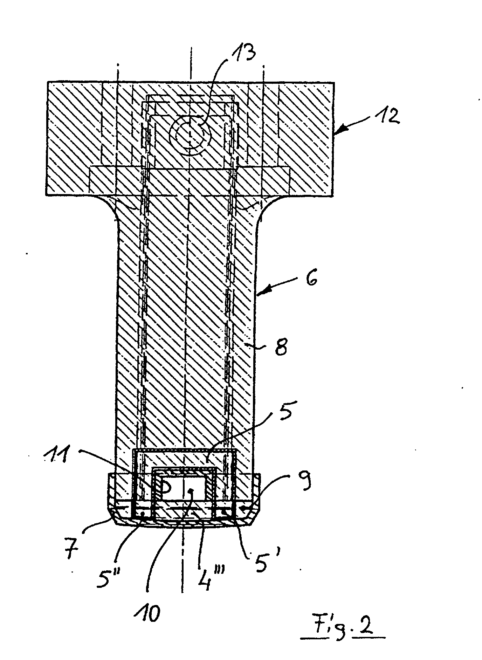

- Figur 2: einen Schnitt durch eine der Elektroden gemäß der Linie II-II in Figur 1.

Eine Vorrichtung 1 zum induktiven Erwärmen zur stoffschlüssigen Verbindung zweier Werkstücke 2 und 3 umfaßt eine hohle, von einem Kühlmittel durchströmte Leiterschleife 4 mit einem eine Feldstreuung reduzierenden Kern 5.

Zur aufgabengemäßen Erzielung einer druckbeaufschlagten Vorrichtung 1 mit der Erwärmung dienenden kurzen, konzentrierten Feldlinien ist erfindungsgemäß in einer hohlen Druckelektrode bzw. Druckinduktor 6, 6' mit einer Isolierkappe 7 eine U-förmig gestaltete Leiterschleife 4 mit ihrem die die Druckelektrode 6, 6' der Länge nach durchsetzenden U-Schenkeln 4', 4" verbindenden Steg 4"' innenseitig der Isolierkappe 7 benachbart angeordnet, wobei zwischen den U-Schenkeln 4', 4" der Leiterschleife 4 ein jochartig gestalteter Kern 5 mit beiderseits des Leiterschleifen-Steges 4"' angeordneten, kappeninnenseitig endenden Jochschenkeln 5', 5" vorgesehen ist.

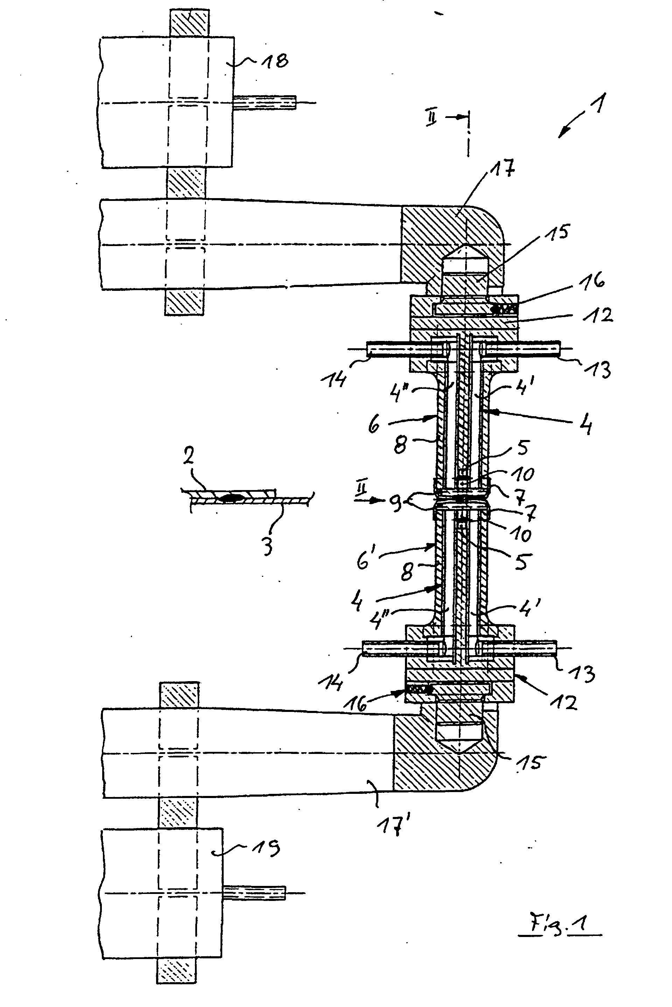

Wie aus Figur 1 ersichtlich, ist jede Druckelektrode 6, 6' als ein kappenseitig offen ausgebildeter Zylinderabschnitt 8 aus einem druckfesten, isolierenden Kunststoff wie z.B. Teflon gestaltet. Weiter sind die hohlen U-Schenkeln 4', 4" der Leiterschleife 4 kappenseitig mit einer den Zylinderabschnitt 8 verschließenden, metallenen Bodenplatte 9 fest und kühlmitteldicht verbunden, wobei die Bodenplatte 9 ferner einen die kühlmittelführenden U-Schenkeln 4', 4" zwischen Bodenplatte 9 und Joch-Kern 5 verbindenden Kühlmittelkanal 10 begrenzt, dessen übrige Begrenzung 11 aus einem Isolierwerkstoff gebildet dem geblechten Joch-Kern 5 im wesentlichen angepaßt ist. Die Kanal-Begrenzung 11 aus eine Isolierwerkstoff ist mit den U-Schenkeln 4' und 4" vorzugsweise durch Kleben kühlmitteldicht verbunden. Die hohlen U-Schenkel 4' und 4" der Leiterschleife 4 sowie die abschnittsweise den Leiterschleifen-Steg 4"' bildende Bodenplatte 9 sind jeweils vorzugsweise aus einer Kupferlegierung gebildet und miteinander kühlmitteldicht verlötet.

Weiter ist die Bodenplatte 9 der jeweils mehrteilig aufgebauten Druckelektrode 6, 6' von einer gesonderten Isolierkappe 7 abgedeckt. Schließlich weist jede Druckelektrode bzw. Druckinduktor 6, 6' einen Anschlußkopf 12 auf mit Anschlüssen für je einen Kühlmittelzulauf 13 und einen Kühlmittelablauf 14 sowie einer mechanischen Verbindungskupplung 15, wobei mittels vorbestimmt winkelbeabstandeten Rasteinrichtungen 16 zwischen Anschlußkopf 12 und Verbindungskupplung 15 die Druckelektrode 6 relativ zu einem Zangenarm 17 bzw. an Zangenarmen 17 und 17' angeordnete Druckelektroden 6, 6' relativ zueinander fixierbar sind. Mit dieser Maßnahme ist es möglich, die in einer Ebene gezeigt angeordneten Joch-Kerne 5 der Druckelektroden 6 und 6' zueinander winkelig anzuordnen, wenn dies beispielsweise durch eine besondere Materialkombination der Werkstücke 2 und 3 vorteilhaft ist.

Mit der erfindungsgemäßen Vorrichtung 1 sind vorteilhafterweise blechartige Werkstücke 2 und 3 von gleicher oder unterschiedlicher Stärke aus Materialien wie beispielsweise Stahl und/oder Aluminium mit gleichen oder unterschiedlichen Schmelzpunkten mittels einer punktuellen Warmknetung durch eine Druckpressung zwischen den diametralen Druckelektroden 6, 6' zu verbinden.

Um beispielsweise ein Alublech 2 mit einem Stahlblech 3 stoffschlüssig zu verbinden, steht sowohl die Leiterschleife 4 der Druckelektrode 6 als auch die Leiterschleife 4 der Druckelektrode 6' jeweils mit einem gesonderten Trafo 18 bzw. 19 oder einem gesonderten, nicht gezeigten Generator in stromführender Verbindung. Hierfür ist jeder Leiterschleife 4 der Druckelektroden 6, 6' jeweils eine dem Schmelzpunkt des zugeordneten Werkstückes 2 bzw. 3 entsprechend gesondert einstellbare Frequenz zwischen 10-400 kHz bei einem Spannungsbereich von 50 - 500 V und einem Strom bis 1.200 A zugeführt, wobei die stoffschlüssig durch Warmknetung zu verbindenden Werkstücke 2 und 3 zwischen den Druckelektroden 6 und 6' mit einer Druckkraft von 1 - 2 kN beaufschlagt sind. Damit ist die jeder Druckelektrode bzw. jedem Druckinduktor 6, 6' gesondert zugeführte elektrische Energie vorteilhafterweise einstellbar auf das Material des von dem jeweiligen Druckinduktor 6, 6' beaufschlagten Werkstückes 2 bzw. 3, wobei gegebenenfalls auch der Druck der Druckinduktoren bzw. Druckelektroden 6, 6' entsprecend angepaßt ist.

Im Rahmen der Erfindung ist es auch möglich, bei einer stoffschlüssigen Verbindung zweier Bleche von etwa gleicher Stärke aus gleichem Material die induktive Erwärmung und die anschließende Druckpress-Verbindung zur Erzielung einer Warmknetung mittels einer einzigen, druckbeaufschlagten Druckelektrode 6 zu erzielen.

## Patentansprüche

1. Vorrichtung zum induktiven Erwärmen zur stoffschlüssigen Verbindung zweier Werkstücke,
- umfassend eine hohle, von einem Kühlmittel durchströmte Leiterschleife (4) mit einem eine Feldstreuung reduzierenden Kern (5),
**dadurch gekennzeichnet,**
- **daß** in einer hohlen Druckelektrode/Druckinduktor (6, 6') mit einer Isolierkappe (7) eine U-förmig gestaltete Leiterschleife (4) mit ihrem die die Druckelektrode (6, 6') der Länge nach durchsetzenden U-Schenkeln (4', 4") verbindenden Steg (4"') innenseitig der Isolierkappe (7) benachbart angeordnet ist, und
- **daß** zwischen den U-Schenkeln (4', 4") der Leiterschleife (4) ein jochartig gestalteter Kern (5) mit beiderseits des Leiterschleifen-Steges (4"') angeordneten, kappeninnenseitig endenden Jochschenkeln (5', 5") vorgesehen ist.

2. Vorrichtung nach Anspruch 1, **dadurch gekennzeichnet,**
- **daß** die Druckelektrode/Druckinduktor (6, 6') als ein kappenseitig offen ausgebildeter Zylinderabschnitt (8) aus einem druckfesten, elektrisch isolierenden Kunststoff gestaltetet ist, und
- **daß** die hohlen U-Schenkel (4', 4") der Leiterschleife (4) kappenseitig mit einer den Zylinderabschnitt (8) verschließenden, metallenen Bodenplatte (9) fest verbunden sind, die
- ferner einen die kühlmittelführenden U-Schenkeln (4', 4") unter dem Joch-Kern (5) verbindenden Kühlmittelkanal (10) begrenzt, dessen
- übrige Begrenzung (11) aus einem Isolierwerkstoff gebildet dem geblechten Joch-Kern (5) im wesentlichen angepaßt ist.

3. Vorrichtung nach Anspruch 2, **dadurch gekennzeichnet, daß** die hohlen U-Schenkel (4', 4") der Leiterschleife (4) sowie die abschnittsweise den Leiterschleifen-Steg (4"') bildende Bodenplatte (9) jeweils aus einer Kupferlegierung gebildet und miteinander dicht verlötet sind.

4. Vorrichtung nach Anspruch 3 in Abhangigkeit von Anspruch 3 und 3, **dadurch gekennzeichnet, daß** die Bodenplatte (9) werkstückseitig von einer gesonderten Isolierkappe (7) abgedeckt ist.

5. Vorrichtung nach einem der Ansprüchen 2 bis 4, **dadurch gekennzeichnet,**
- **daß** die Druckelektrode/Druckinduktor (6, 6') einen Anschlußkopf (12) aufweist mit Anschlüssen (13, 14) für je einen Kühlmittelzu- und -ablauf sowie einer mechanischen Verbindungskupplung (15), wobei
- mittels vorbestimmt winkelbeabstandeten Rasteinrichtungen (16) zwischen Anschlußkopf (12) und Verbindungskupplung (15) die Druckelektrode (6) relativ zu einem Zangenarm (17) bzw. an Zangenarmen (17, 17') angeordnete Druckelektroden (6, 6') relativ zueinander fixierbar sind.

6. Vorrichtung nach einem der Ansprüchen 1 bis 5, **dadurch gekennzeichnet,**
- **daß** die Leiterschleife (4) jeder Druckelektrode bzw. jedes Druckinduktors (6, 6') mit einem gesonderten Trafo (18, 19) oder Generator in stromführender Verbindung steht, wobei
- die jedem Druckinduktor (6, 6') gesondert zugeführte elektrische Energie einstellbar ist auf das Material des von dem jeweiligen Druckinduktor (6, 6') beaufschlagten Werkstückes (2, 3), und
- gegebenenfalls der Druck der Druckinduktoren (6, 6') entsprechend angepaßt ist.

7. Vorrichtung nach einem der Ansprüchen 1 bis 6, **dadurch gekennzeichnet, daß** blechartige Werkstücke (2, 3) von gleicher oder unterschiedlicher Stärke aus Materialien mit gleichen oder unterschiedlichen Schmelzpunkten mittels einer punktuellen Warmknetung durch eine Druckpressung zwischen diametralen Druckelektroden (6, 6') an Zangenarmen (17, 17') verbunden sind.

8. Vorrichtung nach Anspruch 7 in Abhängigkeit von Anspruch 6, **dadurch gekennzeichnet,**
- **daß** jeder Leiterschleife (4) der Druckelektroden (6, 6') jeweils eine dem Schmelzpunkt des zugeordneten Werkstückes (2, 3) entsprechend gesondert einstellbare Frequenz zwischen 10 - 400 kHz bei einem Spannungsbereich von 50-500V und einem Strom bis 1.200 A zugeführt ist, und
- wobei die Werkstücke (2, 3) zwischen den Druckelektroden (6, 6') mit einer Druckkraft von 1 - 2 kN beaufschlagt sind.

## Claims

1. An inductive heating device for welding two components,
- comprising a hollow coolant-circulating loop (4) with a core (5) for reducing the dissipation of flux,
**characterised in that**
- a web (4"') joining the limbs (4', 4"), longitudinally extending through the pressure electrode (6, 6'), of a U-shaped loop (4) is disposed inside and near an insulating cap (7) of a hollow pressure electrode/pressure inductor (6, 6') and
- a core (5) in the shape of a yoke with limbs (5', 5") ending inside the cap on each side of the loop web (4"') is provided between the limbs (4', 4") of the U-shaped loop (4).

2. A device according to claim 1, **characterised in that**
- the pressure electrode/pressure inductor (6, 6') is in the form of a cylindrical portion (8), open on the cap side, of a pressure-resistant electrically insulating plastics material and
- the hollow limbs (4', 4") of the loop (4) are connected on the cap side to a metal end plate (9) which closes the cylinder portion (8) and
- also bounds a coolant duct (10) connecting the coolant-conveying limbs (4',4") under the yoke core (5),
- the rest of the duct boundary (11) being made of an insulating material and substantially adapted to the metal-plated yoke core (5).

3. A device according to claim 2, **characterised in that** the hollow limbs (4, 4") of the loop (4) and the end plate (9), part of which forms the loop web (4"'), are made of a copper alloy and are firmly welded together.

4. A device according to claim 3 dependent on claim 2, **characterised in that** on the workpiece side, the end plate (9) is covered by a separate insulating cap (7).

5. A device according to any of claims 2 to 4, **characterised in that**
- the pressure electrode/pressure inductor (6, 6') has a mechanical connecting coupling (15) and a connecting head (12) with connections (13, 14) for a coolant inlet and coolant outlet respectively, wherein
- by means of catch devices (16) separated by a predetermined angle between the connecting head (12) and the connecting coupling (15), the pressure electrode can be fixed relative to a gripper arm (17), or pressure electrodes (6, 6') disposed on gripper arms (17, 17') can be fixed relative to one another.

6. A device according to any of claims 1 to 5, **characterised in that**
- the loop (4) of each pressure electrode or each pressure inductor (6, 6') is electrically connected to a separate transformer (18, 19) or generator, wherein
- the electric energy supplied separately to each pressure inductor (6, 6') is adjustable to the material constituting the workpiece (2, 3) acted upon by the respective pressure inductor (6, 6') and also
- is adapted if required to the pressure of the pressure inductors (6, 6').

7. A device according to any of claims 1 to 6, **characterised in that** workpieces (2, 3) of sheet metal or the like and having the same or different thickness and made of materials having the same or different melting points are joined by spot-heating and forging by pressure between diametral pressure electrodes (6, 6') on gripper arms (17, 17').

8. A device according to claim 7 in dependence on claim 6, **characterised in that**
- each loop (4) of the pressure electrodes (6, 6') is provided with a frequency individually adjustable to the melting point of the associated workpiece (2, 3) and to between 10 and 400 kHz at a voltage from 50 to 500 V and a current up to 1200 A and
- wherein the workpieces (2, 3) between the pressure electrodes (6, 6') are subjected to a pressure of 1 - 2 kN.

## Revendications

1. Dispositif pour le chauffage inductif destiné à lier deux pièces par leur matériau, comprenant une boucle conductrice (4) creuse traversée par un agent refroidisseur, avec un noyau (5) qui réduit une dispersion du champ,
**caractérisé en ce que**
- dans une piézo-électrode/un piézo-inducteur (6, 6') creux avec un capuchon isolant (7), une boucle conductrice (4) structurée en U est disposée avec sa traverse (4"') qui relie les montants en U (4', 4") traversant en longueur la piézo-électrode (6, 6'), à l'intérieur à proximité du capuchon isolant (7) et
- entre les montants en U (4', 4") de la boucle conductrice (4) on prévoit un noyau (5) de type culasse avec des montants de culasse (5', 5") qui sont disposés des deux côtés de la traverse (4''') de la boucle conductrice et qui se terminent sur le côté intérieur du capuchon.

2. Dispositif selon la revendication 1,
**caractérisé en ce que**
- la piézo-électrode/le piézo-inducteur (6, 6') est structuré(e) en tant que segment cylindrique (8), formé en étant ouvert du côté du capuchon, en un matériau synthétique résistant à la pression et électriquement isolant, et
- les montants en U (4', 4") creux de la boucle conductrice (4) sont solidement reliés du côté du capuchon à une plaque de fond (9) métallique qui ferme le segment cylindrique (8) et qui
- en outre limite un canal d'agent refroidisseur (10) reliant les montants en U (4', 4") - qui conduisent l'agent refroidisseur - au-dessous du noyau (5) de culasse, canal dont
- l'autre limite (11) constituée d'un matériau isolant est pratiquement ajustée au noyau (5) de culasse tôlé.

3. Dispositif selon la revendication 2,
**caractérisé en ce que**
les montants en U (4', 4") creux de la boucle conductrice (4) ainsi que la plaque de fond (9) qui forme par segments la traverse (4"') de la boucle conductrice sont constitués chacun d'un alliage de cuivre et sont brasés jointivement l'un à l'autre.

4. Dispositif selon la revendication 3,
**caractérisé en ce que**
la plaque de fond (9) du côté de la pièce est recouverte d'un capuchon isolant (7) distinct.

5. Dispositif selon l'une des revendications 2 à 4,
**caractérisé en ce que**
- la piézo-électrode/le piézo-inducteur (6, 6') présente une tête de raccordement (12) avec des raccordements (13, 14) respectivement pour une entrée et une sortie d'agent refroidisseur, et avec un couplage de liaison (15) mécanique, pour lequel
- à l'aide d'installations de blocage (16) à des intervalles angulaires prédéfinis entre la tête de raccordement (12) et le couplage de liaison (15) on peut fixer la piézo-électrode relativement sur un bras de tenaille (17), ou les piézo-électrodes (6, 6') disposées sur des bras de tenaille (17, 17') les unes par rapport aux autres.

6. Dispositif selon l'une des revendications 1 à 5,
**caractérisé en ce que**
- la boucle conductrice (4) de chaque piézo-électrode ou de chaque piézo-inducteur (6, 6') est en liaison conductrice avec un transformateur (18, 19) ou avec un générateur distinct,
- on peut régler l'énergie électrique, conduite de façon distincte à chaque piézo-inducteur (6, 6'), sur le matériau de la pièce (2, 3) alimentée par le piézo-inducteur (6, 6') concerné et
- la pression des piézo-inducteurs (6, 6') est éventuellement ajustée en conséquence.

7. Dispositif selon l'une des revendications 1 à 6,
**caractérisé en ce que**
des pièces (2, 3) en tôle, d'épaisseur égale ou différente, constituées de matériaux qui ont des points de fusion identiques ou différents, sont reliées aux bras de tenaille (17, 17') à l'aide d'un malaxage de chaleur ponctuel par une pression de compression entre des piézo-électrodes (6, 6').

8. Dispositif selon la revendication 7 en fonction de la revendication 6,
**caractérisé en ce que**
- à chaque boucle conductrice (4) de chaque piézo-électrode (6, 6') est respectivement conduite une fréquence, réglable de façon distincte, qui correspond au point de fusion de la pièce (2, 3) associée, comprise entre 10 et 400 kHz, pour une plage de tensions de 50 à 500 V et un courant jusqu'à 1 200 A, et
- pour lequel les pièces (2, 3) sont alimentées avec une force de compression de 1 à 2 kN entre les piézo-électrodes (6, 6').
